# FASCICULE DE BREVET EUROPEEN

(11) **EP 0 579 822 B1**
(45) Date de publication et mention de la délivrance du brevet: **21.08.1996**
(21) Numéro de dépôt: 93905372.4
(22) Date de dépôt: 05.02.1993
(51) Int. Cl.: B29B 15/12, B29C 47/28

(54) **PROCEDE DE FABRICATION D'UN FIL COMPOSITE ET PRODUITS COMPOSITES OBTENUS A PARTIR DUDIT FIL**
Herstellungsverfahren von Verbundgarn und Verbundprodukt aus diesem Garn
PROCESS FOR THE MANUFACTURE OF A COMPOSITE THREAD AND COMPOSITE PRODUCTS OBTAINED FROM SAID THREAD

(30) Priorité: 06.02.1992 FR 9201329
(43) Date de publication de la demande: 26.01.1994
(73) Titulaire: VETROTEX FRANCE S.A., F-73000 Chambéry (FR)
(72) Inventeur: BOISSONNAT, Philippe, F-73230 Barby (FR); LOUBINOUX, Dominique, F-38660 La Terrasse (FR); ROY, Louis, F-73000 Chambéry (FR)
(74) Mandataire: Breton, Jean-Claude
(86) Numéro de dépôt international: FR9300125
(87) Numéro de publication internationale: WO9315893

(56) Documents cités:
- EP-A- 0 033 244
- EP-A- 0 123 288
- EP-A- 0 218 952
- EP-A- 0 393 536
- DE-B- 1 139 970
- FR-A- 1 024 205
- FR-A- 2 394 393
- US-A- 2 198 085
- US-A- 3 694 131

## Description

La présente invention concerne la fabrication d'un fil composite formé par l'association d'une multiplicité de filaments, gainé d'une matière organique thermoplastique.

La présente invention concerne plus particulièrement la fabrication d'un fil composite formé de filaments servant de renfort, tels que les filaments de verre, et de filaments d'une matière organique thermoplastique, ledit fil étant gainé, voire même imprégné à coeur d'une matière organique thermoplastique.

La fabrication de produits composites, formés par l'association de fils de renfort et d'une matière organique thermoplastique, est réalisée de préférence en utilisant des matériaux composites dans lesquels le renfort et la matière organique sont déjà réunis. C'est le cas notamment des pièces obtenues par enroulement sur un mandrin en rotation ou celui des produits composites souples obtenus par tissage par exemple.

Il existe déjà de nombreux moyens d'associer des fils de renfort et une matière organique thermoplastique. Ces moyens peuvent se répartir en deux grandes catégories : ceux qui cherchent à enrober chaque filament constituant un fil, par exemple, par immersion dans un bain de matière organique à l'état fondu, et ceux qui recherchent à gainer un fil formé d'une multiplicité de filaments.

Parmi l'art antérieur décrivant ces derniers moyens, citons par exemple le brevet EP-B-133 825. Ce document décrit un matériau composite formé d'une mèche de filaments de renfort enrobés d'une poudre fine de résine thermoplastique, ladite mêche étant gainée par une matière thermoplastique dont le point de fusion est égal ou inférieur à celui de la poudre d'enrobage. Cette mêche, au sein de laquelle les grains de poudre ont la liberté de se déplacer entre les filaments, se caractérise par sa souplesse. Grâce à cette qualité, une telle mêche peut se prêter à des opérations de tressage ou de tissage. Cette mêche ne peut cependant pas être tronçonnée car elle perdrait aussitôt une grande partie de la poudre thermoplastique qu'elle renferme.

Le procédé utilisé pour fabriquer une telle mêche consiste à extraire une mêche continue d'une bobine, à la charger électrostatiquement de manière à séparer les filaments qui la constituent, à lui faire traverser ainsi un lit fluidisé de particules de poudre de résine, à reformer la mêche par la réunion des filaments recouverts de poudre, puis à la gainer d'une couche de matière organique thermoplastique. Ce gainage peut être obtenu de différents moyens, notamment par extrusion. Dans ce mode de réalisation, la mêche chargée de poudre passe dans une filière montée en tête d'equerre du type des têtes de recouvrement de fils électriques ou téléphoniques. Le principe du procédé utilisé limite la vitesse de défilement de la mêche qui, d'après l'exemple cité, est de l'ordre de 1 à 2 mètres par seconde.

La demande de brevet EP-A-33 244 décrit un autre matériau composite et son procédé d'obtention. Ce document décrit notamment une mêche composite formée par l'association de fils continus de renfort et de fils continus d'une matière organique thermoplastique, ladite mêche étant ensuite gainée d'une matière organique thermoplastique. Cette mêche est obtenue selon un procédé qui consiste à extraire les fils de renforts et les fils de matière organique d'enroulements séparés, à les assembler en une seule mêche à l'entrée d'un dispositif de chauffage, dont la fonction est de ramollir suffisamment les fils de matière organique de manière à ce que l'ensemble des fils adhèrent les uns aux autres. La mêche ainsi consolidée passe dans un second dispositif, connu en soi, qui la recouvre d'une couche de matière organique thermoplastique.

Bien qu'aucun exemple ne soit donné, il est très vraisemblable que le procédé utilisé ne permette pas d'envisager des vitesses de défilement élevées. Le simple chauffage des fils organiques, destiné à donner une cohésion à la mêche, ne permet sans doute pas de dépasser des vitesses de défilement de l'ordre de un mètre par seconde. Par ailleurs, le collage des fils entre eux confère à la mêche une certaine raideur.

La demande de brevet EP-A-393 536 décrit un fil formé d'une multiplicité de filaments et gainé de résine thermoplastique ; une partie de ces filaments sont séparés les uns des autres et sont entourés de résine, les autres restant assemblés sous forme de faisceaux.

Ce produit est obtenu en faisant passer un fil dans une filière montée en tête d'équerre à l'extrémité d'une extrudeuse, au sein de laquelle il est mis en contact avec une résine thermoplastique sous pression. L'injection de résine perpendiculairement à la trajectoire du fil, depuis un orifice reliant la paroi de la chambre centrale de la filière à l'extrudeuse, provoque un fractionnement du fil et la séparation d'un certain nombre de filaments les uns des autres. La pression exercée préférentiellement d'un seul côté du fil a pour effet également de provoquer une répartition irrégulière du renfort au sein de la résine fondue.

Le procédé utilisé nécessite, préalablement à l'imprégnation du fil de le traiter thermiquement afin d'éliminer les matières déposées à la surface des filaments et susceptibles de se décomposer à basse température. Bien qu'aucune valeur ne soit donnée, il est vraisemblable que ce procédé ne permet pas de dépasser des vitesses de défilement de l'ordre de un mètre par seconde.

La demande de brevet FR-A-1 024 205 décrit un dispositif, monté en tête d'équerre à l'extrémité d'une extrudeuse, qui permet de revêtir un fil passant par son axe d'une gaine de matière organique. Les arrivées de matière dans ce dispositif sont conçues de manière à éviter la stagnation de matière dans les angles morts dudit dispositif. Elles permettent de conférer à la matière un écoulement tourbillonnaire autour d'un axe matérialisé par le fil à gainer.

La présente invention a pour objet un procédé de fabrication d'un fil gainé d'une matière organique thermoplastique, qui permet de s'affranchir des limitations apportées, dans l'art antérieur, à la vitesse de défilement lors de l'opération de gainage.

La présente invention a notamment pour objet un procédé qui permet d'obtenir toute la gamme de produits depuis le fil composite souple simplement revêtu d'une fine couche superficielle de matière organique thermoplastique, jusqu'au fil composite imprégné, au moins en partie, de matière organique thermoplastique.

D'autres aspects de l'invention concerne des fils composites dont l'âme, formée d'un faisceau de filaments d'au moins deux matières différentes, est enrobée d'une matière organique thermoplastique, ainsi que les pièces composites réalisées à partir des fils obtenus selon l'invention.

Les buts de l'invention sont atteints grâce à un procédé de fabrication d'un fil composite formé d'une multiplicité de filaments associés à une matière organique thermoplastique, selon lequel ledit fil est entraîné mécaniquement dans l'axe du canal central d'un dispositif monté en tête d'équerre à l'extrémité d'une extrudeuse, le fil étant mis en contact avec la matière organique à l'état fondu sous pression dans ledit canal et qui consiste à injecter la matière organique dans le canal en direction du fil concentriquement à ce dernier, et à soumettre ledit fil dès son contact avec la matière a une pression radiale maximale constante sur au moins une partie de son parcours dans ledit canal, ladite pression dans le canal demeurant inférieure à 50 bars.

Selon l'application envisagée, les filaments peuvent être des filaments de verre ou de carbone, des filaments aramides connus, par exemple, sous la marque KEVLAR.

Le fil de départ peut être aussi un fil mixte formé par l'association de fils de nature différente, extraits d'enroulements distincts, juste avant l'introduction du fil dans la filière, ou d'un enroulement unique de fil mixte préalablement fabriqué.

Le fil mixte utilisable dans le cadre de l'invention peut être également obtenu en associant, par exemple, un fil organique extrait d'un enroulement et des filaments de verre en cours d'étirage ou, inversement, un fil de verre extrait d'un enroulement et des filaments organiques en cours d'étirage.

La mise en oeuvre de l'invention dans le cadre d'un procédé direct est encore plus avantageuse. En effet, il est possible de réaliser le gainage d'un fil dans le cadre de son procédé de fabrication. Ainsi, par exemple, une multiplicité de filaments continus, formés par étirage mécanique de filets de verre fondu issus d'une filière, sont rassemblés en un fil qui est directement gainé de matière à la vitesse d'étirage des filaments qui le constituent. De même, il est possible de gainer directement un fil mixte obtenu selon le procédé décrit dans la demande de brevet EP-A-367 661. Dans l'un des modes de réalisation décrit dans ce document, le fil mixte est formé par l'association de filaments de verre, issus d'une filière alimentée en verre fondu, et de filaments organiques issus d'une tête d'extrusion alimentée en matière organique thermoplastique.

La mise en oeuvre de l'invention dans le cadre d'un procédé direct est doublement avantageuse dans la mesure où elle évite la fabrication et le stockage d'enroulements de fil préalablement à l'opération de gainage, et dans la mesure où la longueur de fil gainé produite par unité de temps peut être plus de dix fois supérieure à celle atteinte par les procédés connus.

En effet, le procédé selon l'invention permet de réduire considérablement le cisaillement de la matière organique entrant en contact avec un fil entraîné à grande vitesse et d'éviter que le fil soit soumis à de trop fortes tensions, susceptibles de provoquer la rupture de certains filaments qui le constituent. Les forces de cisaillement sont réduites en injectant la matière organique dans le canal central de manière à ce que le courant de matière injectée soit dirigé vers la sortie du dispositif. Dès son injection dans le canal central, la matière organique se propage ainsi dans une direction voisine de celle suivie par le fil en cours de déplacement. L'écart de vitesse entre la matière organique et le fil est ainsi considérablement réduit. Cet écart est réduit, de préférence, dès que le fil vient en contact avec la matière organique. C'est la raison pour laquelle l'injection de matière est effectuée, de préférence, dès l'entrée du canal central du dispositif.

Selon l'invention l'injection de matière est effectuée de manière à ce que le courant de matière se déplace vers la sortie du canal à une vitesse moyenne égale au moins à 0,5 fois la vitesse de déplacement du fil. Ceci peut être obtenu en injectant la matière sous une pression relativement faible, inférieure à 50 bars et, de préférence, inférieure à 30 bars.

Ainsi, lorsque la vitesse de passage du fil augmente, le maintien d'un écart de vitesse suffisamment faible, garant d'un revêtement régulier dudit fil, peut être réalisé en augmentant légèrement la pression de la matière injectée.

Le procédé selon l'invention permet ainsi de faire passer le fil dans le dispositif à des vitesses supérieures à cinq mètres par seconde, sans nuire à la régularité du revêtement dudit fil et à la qualité de son imprégnation.

Grâce au procédé selon l'invention, la matière organique à l'état fondu exerce à la surface du fil, dès son contact avec ce dernier, une pression radiale régulière. Le fil, soumis a un champ de pressions équilibrées pendant son trajet dans le dispositif, n'a pas tendance à se fragmenter.

De plus, la pression qu'exerce la matière doit être à sa valeur maximale dès son contact avec le fil. En effet, le fil arrivant pratiquement froid dans le dispositif, la viscosité de la matière à son contact augmente. Si le fil est soumis initialement à une pression relativement faible, une couche de matière visqueuse se forme à sa surface et empêche son imprégnation, même si une pression plus élevée s'exerce ultérieurement sur lui.

De plus, avec un canal central dont la section droite est constante sur au moins une partie de sa longueur, on peut maintenir sur le fil une pression radiale maximale constante sur au moins une partie de son trajet dans ce canal. Ceci favorise la qualité de l'imprégnation du fil obtenu.

En réglant la pression et/ou la viscosité de la matière organique ainsi que la vitesse de passage du fil dans le dispositif il est possible, pour une matière organique donnée, de contrôler l'épaisseur de la zone de pénétration de la matière au sein du fil. On obtient ainsi un fil dont la partie centrale est formée d'un faisceau de filaments non imprégnés de matière organique, entourée à sa périphérie d'une zone imprégnée de matière, l'ensemble étant revêtu d'une couche dont l'épaisseur est réglée à la sortie du dispositif par un orifice de calibrage.

L'épaisseur de la zone d'imprégnation du fil dépend également du degré de compatibilité chimique susceptible d'exister entre la matière organique fondue et les filaments constituant le fil. Si cette compatibilité est grande les filaments sont facilement mouillés par la matière organique qui pourra pénétrer au sein du fil. A l'inverse, lorsque filaments et matière organique sont peu compatibles chimiquement, le fil sortira de la filière revêtu d'une simple couche déposée à sa surface.

A la sortie du dispositif, cette couche de matière encore chaude est collante. Si la vitesse de passage du fil est élevée, il est nécessaire de refroidir au moins la zone superficielle de cette couche avant que le fil vienne en contact avec un dispositif quelconque.

Ce refroidissement doit être d'autant plus énergique que la vitesse du fil est élevée. Ce refroidissement est obtenu en lui faisant traverser une zone au sein de laquelle il est soumis à l'action d'un fluide gazeux ou liquide. Le refroidissement le plus rapide est obtenu en pulvérisant des gouttelettes d'eau sur le passage du fil.

Selon un mode de réalisation de l'invention, on imprime un mouvement de rotation continue au fil en cours de déplacement, provoquant ainsi sa torsion.

Ce mouvement de rotation peut être obtenu grâce à des dispositifs du type de ceux décrits dans la demande de brevet EP-A-273 812 ; par exemple deux courroies sans fin ou une buse dirigeant un jet d'air sous forte pression tangentiellement au fil.

Ce dispositif est implanté en aval de la zone de refroidissement. Lorsque le fil est refroidi par pulvérisation d'eau, le dispositif par jet d'air permet d'éliminer l'eau demeurant à la surface dudit fil après son passage dans la zone de refroidissement.

Le mouvement de rotation est imprimé au fil de manière à ce que la torsion prenne naissance en amont de l'entrée du dispositif. Ainsi, le fil présentant une simple torsion est enrobé de matière organique qui, après refroidissement, permet de fixer ladite torsion.

Les fils obtenus selon l'invention présentent une âme formée d'un faisceau de filaments, dont une partie au moins sont susceptibles de se déplacer les uns par rapport aux autres, environnée de matière organique. La flexibilité de ces fils, conférée par la mobilité des filaments de leur âme, et leur protection par un revêtement de matière organique en font un matériau de choix pour la réalisation de pièces composites par enroulement sur un support ou par pultrusion ou pour la fabrication de tissus ou de tricots-chaine destinés à servir de renfort à des matières organiques ou minérales.

Les fils obtenus selon l'invention peuvent être coupés et sont avantageusement utilisés sous cette forme dans le cadre d'un procédé de fabrication de pièces composites par extrusion. Le revêtement de matière thermoplastique qui les enrobe protège les filaments de l'âme lors du malaxage qu'ils subissent dans l'extrudeuse.

L'invention sera mieux appréciée grâce à la description détaillée ci-après d'un mode de réalisation donné à titre d'exemple, illustrée par les figures suivantes :
* **la figure 1** représente schématiquement une vue latérale partielle d'un exemple d'installation qui permet la mise en oeuvre de l'installation,
* **la figure 2** représente schématiquement une vue en coupe longitudinale du dispositif utilisé dans le cadre de l'installation de la figure 1.

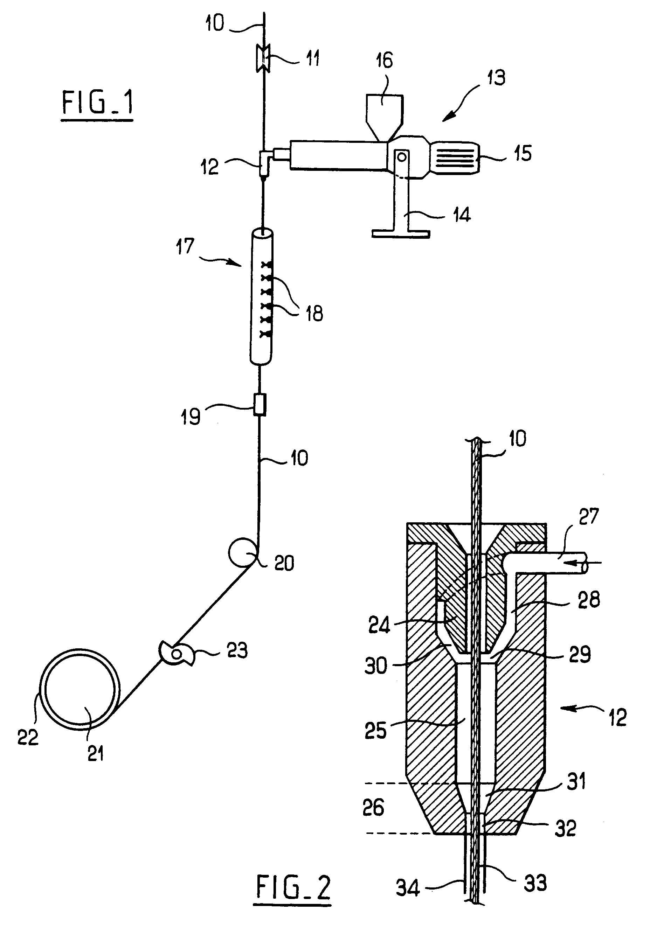

Selon la figure 1 un fil mixte 10, formé d'un ensemble de filaments continus de renfort et de matière organique thermoplastique, est guidé par un organe 11. Cet organe a pour fonction d'amener le fil 10 dans l'axe du dispositif 12 monté en tête d'équerre et verticalement à l'extrémité de l'extrudeuse 13. Cette extrudeuse, solidaire du support 14, est équipée d'une vis d'Archimède animée en rotation par le moteur 15. L'extrudeuse 13 est alimentée en matière organique thermoplastique sous forme de granulés, par l'intermédiaire de la trémie 16. Cette extrudeuse permet d'injecter la matière organique à l'état fondu dans le dispositif 12, sous une forte pression qui peut atteindre 50 bars.

Un dispositif 17 de refroidissement du fil peut être implanté en aval du dispositif 12. Le dispositif représenté est constitué d'un cylindre 18, dont l'axe coïncide avec celui du dispositif 12, équipé d'une série de buses permettant de pulvériser de l'eau à l'intérieur dudit cylindre.

En aval du dispositif 17 et dans l'axe de celui-ci, un dispositif de torsion du fil 10, symbolisé en 19, peut être implanté. Ce dispositif peut être du type de celui décrit dans l'article "L'Industrie Textile - No. 1166 - 5/86 - 485-492", fonctionnant sur le principe de la torsion conférée par jet d'air.

Si la vitesse de défilement du fil 10 est faible, le dispositif 19 peut être implanté directement en aval du dispositif 12.

Le dispositif 19 est réglé de manière à ce que la torsion du fil 10 remonte en amont du dispositif 12.

Le fil 10, revêtu d'une couche de matière organique figée au moins en surface, passe sur un organe de guidage 20 avant d'être bobiné sur une broche 21, mue en rotation par un moteur fixé dans un bâti non représenté. Le fil 10 est bobiné sous forme d'un enroulement 22 grâce à un organe de répartition 23.

Au lieu d'être entraîné par une broche en rotation, le fil 10 peut l'être par une roue d'étirage et réparti sur un convoyeur, conformément aux procédés et aux dispositifs décrits, par exemple, dans les brevets US-A-3 467 739 et US-A 3 676 095.

Le fil 10 peut être également entraîné par une machine de coupe comme le prévoit, par exemple, le brevet US-A 4 406 196. Dans ce dernier cas le fil a, de préférence, subi une torsion figée lors du refroidissement de la matière organique, structure qui lui évite d'être écrasé entre les roues de la machine de coupe comme un fil ordinaire.

Le mode d'imprégnation et de revêtement du fil 10 par une matière organique thermoplastique à l'état fondu est illustré par la figure 2. La vue en coupe longitudinale du dispositif 12 montre que ce dernier comprend un poinçon creux 24, un canal central 25 et une zone 26 où la section droite de passage du fil est réduite.

Le dispositif 12 est relié à l'extrudeuse par l'intermédiaire du canal d'alimentation 27. Ce canal débouche, à l'intérieur du dispositif 12, dans une chambre 28 qui entoure le poinçon 24. Cette chambre aboutit, sous la forme d'une ouverture annulaire 29, au sommet du canal central 25.

Le poinçon 24 a pour fonction essentielle de guider le fil 10 et de le centrer parfaitement. La chambre 28 épouse la forme externe du poinçon 24, en particulier sa zone inférieure 30, de forme tronconique, qui converge vers le fil 10 à son entrée dans le canal central.

Grâce à cette structure interne particulière, lorsque le fil arrive en contact avec la matière organique, cette dernière exerce dès ce contact une pression régulière sur toute la périphérie dudit fil. De ce fait, l'ensemble des filaments qui constituent le fil étant soumis à la même pression, conservent leur cohésion.

La zone 26, formée d'une zone tronconique 31 d'un passage à section constante 32, permet de maintenir la matière organique sous pression dans le canal central. Le passage 32 permet de calibrer le diamètre du fil enrobé de matière. A la sortie du dispositif 12, le fil obtenu comprend une âme 33, formée par le faisceau de filaments constituant le fil 10, enrobée à sa périphérie d'une couche régulière 34 de matière organique.

### EXEMPLE 1 :

Un fil mixte, formé de 800 filaments de verre E, d'un diamètre moyen de 14 micromètres, et de 750 filaments de polypropylène homopolymère (indice de fluidité égal à 20 dg/min, mesuré selon la norme ISO 1133) d'un diamètre moyen de 25 micromètres intimement mélangés, est enrobé dans les conditions suivantes :
* Extrudeuse monovis :

| | |
|---|---|
| . diamètre de vis | 25 mm-L/D=30 |
| . débit maximum | 10 kg/h |

* le dispositif disposé en tête d'équerre à l'extrémité de l'extrudeuse correspond à celui représenté figure 2 :

| | |
|---|---|
| . diamètre du passage du poinçon (24) | 0,95 mm |
| . diamètre du canal central (25) | 2,00 mm |
| . diamètre de l'orifice de calibrage (32) | 1,10 mm |

* le dispositif est alimenté par une matière à l'état fondu formée du mélange suivant :

| . 35 % d'une résine hydrocarbonée hydrogénée | |
|---|---|
| - point de ramollissement bille/anneau | 97-103°C |
| - viscosité Brookfield | 150 mPa.s à 180°C |

| . 65 % d'une cire de polypropylène | |
|---|---|
| - point de ramollissement bille/anneau | 163°C |
| - viscosité Brookfield | 600 mPa.s à 190°C |
| . température du dispositif | 230°C |
| . pression à l'intérieur du dispositif | 10 à 15 bars |
| . vitesse du fil | 10 m.s⁻¹ |

* Le fil parcourt l'axe d'un cylindre d'environ un mètre de longueur, muni d'une série de buses à partir desquelles de l'eau est pulvérisée sur son passage.
* Un ensimage en phase aqueuse a été déposé sur les filaments de verre ; cet ensimage comprend pour l'essentiel un silane aminé et un agent de couplage du type polypropylène modifié anhydride maléique.
* Le fil obtenu est simplement gainé ; la quantité de matière déposée à sa surface, exprimée en pourcentage pondéral par rapport au titre initial du fil est de 20 %.

### EXEMPLE 2 :

Un fil mixte, formé de 800 filaments de verre E, d'un diamètre moyen de 14 micromètres, et de 800 filaments de polypropylène homopolymère (indice de fluidité égal à 35dg/min) d'un diamètre moyen de 26 micromètres est enrobé dans les conditions suivantes :
* l'extrudeuse est identique à celle employée dans l'exemple précédent. Le dispositif monté en tête d'équerre semblable au précédent présente les caractéristiques suivantes :

| | |
|---|---|
| . diamètre de passage du poinçon (24) | 1,4 mm |
| . diamètre du canal central (25) | 2,0 mm |
| . diamètre de l'orifice de calibrage (32) | 1,2 mm |

* le dispositif est alimenté par un polypropylène homopolymère (indice de fluidité égal à 35dg/min) dans les conditions suivantes :

| | |
|---|---|
| . température du dispositif | 260°C |
| . pression à l'intérieur du dispositif | 6 bars |
| . vitesse du fil | 17 m.s⁻¹ |

* l'ensimage déposé sur les filaments de verre est identique à celui de l'exemple précédent et le fil mixte une fois gainé est refroidi dans les mêmes conditions.

### EXEMPLE 3 :

Le fil mixte utilisé et les conditions d'enrobage sont les mêmes que dans l'exemple n° 1 hormis les différences suivantes :
* les filaments organiques ont été obtenus par filage d'un mélange d'un polypropylène homopolymère (indice de fluidité - 20 dg/min) et d'un polypropylène modifié chimiquement par greffage d'anhydride maléique. Ce dernier constituant a pour effet d'augmenter la polarité des filaments organiques.
* Les filaments de verre sont ensimés par un ensimage en phase non-aqueuse. Cet ensimage comprend pour l'essentiel une résine époxy-cycloaliphatique, un vinyl éther et un silane amine.
* Le mélange injecté dans la filière comprend les mêmes constituants, à raison de 30 % pour la résine, 50 % pour la cire, auxquels on ajoute 20 % d'un polyprolylène modifié chimiquement par greffage d'anhydride maléique.
* Le polypropylène présente les caractéristiques suivantes :

| | |
|---|---|
| . point de ramollissement bille/anneau | 157°C |
| . viscosité Brookfield | 275 mPa.s à 190°C |

* Les conditions d'enrobage du fil sont les mêmes que précédemment.
* Le fil obtenu comprend une âme formée par le faisceau des filaments dont la zone externe est imprégnée de matière organique, l' ensemble étant recouvert d' une couche de ladite matière.
* La quantité de matière organique déposée sur le fil mixte, exprimée en pourcentage pondéral par rapport au titre du fil est de 20 %.

Les fils composites selon l'invention permettent de réaliser directement différents produits composites, comme l'illustre les exemples suivants :

### EXEMPLE 4 :

* Le fil composite de l'exemple 3 a été utilisé pour réaliser un tissu dans les conditions suivantes : une chaîne de 2,6 fils par centimètre est préparée sur un métier à tisser à lance de 1,27 mètre de large. Un tissu d'armure toile avec une contexture trame de 2,2 fils par centimètre est réalisé à une vitesse d'insertion de 100 coups par minute.
* Le tissu obtenu (390 g/m²) présente une bonne tenue et il est suffisamment déformable pour s'appliquer sur un moule de thermoformage servant à la réalisation de pièces composites.

### EXEMPLE 5 :

* Le fil composite de l'exemple 3 est disposé en chaîne avec une jauge de 2,35 fils par centimètre sur un métier à tricoter, chaîne à insertion de trame. Le fil de liaison est un fil de polypropylène de 55 Tex.
* Ce même fil de polypropylène est inséré en trame afin de réaliser une structure plane de 205 g/m². Cette structure peut être utilisée pour obtenir un renforcement unidirectionnel au sein d'une pièce thermoformée.

### EXEMPLE 6 :

* 55 bobines de fil composite, identique à celui de l'exemple 3, sont disposées sur des cantres en amont d'une ligne de pultrusion thermoplastique. Cette ligne comporte un tunnel de préchauffage par rayonnement, une filière de profil convergent, à section droite rectangulaire, maintenue à 240°C, un conformateur également régulé en température et un dispositif de tirage à bandes. Un profilé de 15mm x 3mm, comprenant 42 % de renfort en poids, est réalisé en continu. Ce profilé peut être soit utilisé comme semi-produit pour la réalisation de pièces composites complexes, soit trouver des applications dans des ouvrages de Génie Civil (tirants de précontrainte ou haubans par exemple).

### EXEMPLE 7 :

* Une nappe de 4 fils composites, identiques à celui décrit à l'exemple 3, est bobinée, selon un mouvement planétaire, sur un mandrin démontable. Un réservoir formé de polypropylène renforcé par 42 % en poids de verre a été réalisé en continu. L'inertie chimique du polypropylène permet d'utiliser ce réservoir pour le stockage et le transport de produits chimiques.

## Revendications

1. Procédé de fabrication d'un fil composite, formé d'une multiplicité de filaments associés à une matière organique thermoplastique, selon lequel ledit fil est entraîné mécaniquement dans l'axe du canal central d'un dispositif monté en tête d'équerre à l'extrémité d'une extrudeuse, le fil étant mis en contact avec la matière organique à l'état fondu sous pression dans ledit canal, **caractérisé en ce qu**'on injecte la matière organique dans le canal en direction du fil et concentriquement à ce dernier, et à soumettre ledit fil dès son contact avec la matière a une pression radiale maximale constante sur au moins une partie de son parcours dans ledit canal, ladite pression dans le canal demeurant inférieure à 50 bars.

2. Procédé selon la revendication 1, **caractérisé en ce que** l'injection de matière organique dans le canal central du dispositif est effectuée de manière à ce que le courant de matière injectée soit dirigé vers la sortie dudit canal.

3. Procédé selon l'une des revendications précédentes, **caractérisé en ce que** l'injection de matière organique est effectuée de manière à ce que le courant de matière se déplace à une vitesse moyenne au moins égale à 0,5 fois la vitesse de déplacement du fil.

4. Procédé selon l'une des revendications précédentes, **caractérisé en ce qu'on** entraîne le fil à une vitesse au moins égale à 5 mètres par seconde.

5. Procédé selon l'une des revendications précédentes, **caractérisé en ce que**, pour une matière organique donnée, on contrôle l'épaisseur de sa zone de pénétration au sein du fil en réglant la pression et/ou la viscosité de ladite matière arrivant dans le canal central du dispositif et/ou la vitesse de passage du fil à travers le dispositif.

6. Procédé selon l'une des revendications précédentes, **caractérisé en ce que**, en aval du dispositif, on refroidit le fil enrobé de matière organique thermoplastique en lui faisant traverser une zone au sein de laquelle il est soumis à l'action d'un fluide gazeux ou liquide.

7. Procédé selon la revendication 6, **caractérisé en ce qu**'on refroidit le fil en pulvérisant sur son passage des gouttelettes d'eau.

8. Procédé selon l'une des revendications précédentes, **caractérisé en ce qu**'on imprime un mouvement de rotation continue au fil en cours de déplacement **et qu**'on confère une torsion dudit fil.

9. Procédé selon la revendication 8, **caractérisé en ce que** le mouvement de rotation est imprimé au fil de manière à ce que la torsion du fil prenne naissance en amont de l'entrée du dispositif.

10. Fil composite obtenu selon le procédé défini par la revendication 1, **caractérisé en ce qu**'il est formé d'une âme comprenant des filaments d'une matière servant de renfort, ladite âme étant enrobée d'une couche de matière organique thermoplastique et au moins partiellement imprégnée par ladite matière.

11. Fil composite selon la revendication 10, **caractérisé en ce que** son âme est formée de l'ensemble des filaments regroupés en un seul faisceau, une partie d'entre eux au moins demeurant libres de se déplacer les uns par rapport aux autres.

12. Fil composite selon la revendication 11, **caractérisé en ce que** son âme est formée d'un faisceau de filaments comprenant une torsion.

13. Fil composite selon l'une des revendications 10 à 12, **caractérisé en ce que** l'âme dudit fil est constituée de filaments d'une matière servant de renfort et des filaments d'une matière organique thermoplastique.

14. Fil composite selon la revendication 13, **caractérisé en ce qu'**il est formé de filaments continus de verre associés à des filaments formés d'une matière choisie dans le groupe des matières organiques susceptibles d'être transformées en filaments continus, telles que les polypropylènes, les polyamides, les polyesters.

15. Pièce composite, **caractérisé en ce qu**'elle est obtenue par enroulement sur un support d'un fil tel que défini par l'une des revendications 10 à 14.

16. Tissu ou tricot-chaîne, **caractérisé en ce que** sa trame et/ou sa chaine sont formées par un fil tel que défini par l'une des revendications 10 à 14.

17. Profilé composite obtenu par pultrusion à partir d'une multiplicité de fils de renfort, **caractérisé en ce qu**'au moins une partie des fils utilisés sont des fils composites tels que définis par l'une des revendications 10 à 14.

## Claims

1. Process for the manufacture of a composite thread formed by a multiplicity of filaments associated with a thermoplastic organic material, according to which the thread is entrained mechanically along the axis of the central channel of a device mounted as the crosshead at the end of an extruder, the thread being brought into contact with the organic material in the molten state under pressure in the said channel, characterised in that the organic material is injected into the channel in the direction of the thread and concentrically with the latter, and the thread is subjected, as soon as it comes into contact with the material, to a maximum radial pressure which is constant over at least a portion of its course in the channel, the pressure in the channel remaining less than 50 bars.

2. Process according to Claim 1, characterised in that the injection of organic material into the central channel of the device is effected in such a manner that the current of injected material is directed towards the outlet of the channel.

3. Process according to either of the preceding claims, characterised in that the injection of organic material is carried out in such a manner that the current of material moves at an average speed of at least 0.5 times the speed of movement of the thread.

4. Process according to any one of the preceding claims, characterised in that the thread is entrained at a speed of at least 5 metres per second.

5. Process according to any one of the preceding claims, characterised in that, for a given organic material, the thickness of its area of penetration inside the thread is controlled by regulating the pressure and/or the viscosity of the material entering the central channel of the device and/or the speed of passage of the thread through the device.

6. Process according to any one of the preceding claims, characterised in that, downstream of the device, the thread coated with thermoplastic organic material is cooled by causing it to pass through an area inside which it is subjected to the action of a gaseous or liquid fluid.

7. Process according to Claim 6, characterised in that the thread is cooled by spraying droplets of water onto it as it passes.

8. Process according to any one of the preceding claims, characterised in that a continuous rotating movement is imparted to the thread as it moves and a twist is conferred on the thread.

9. Process according to Claim 8, characterised in that the rotating movement is imparted to the thread in such a manner that the twist on the thread originates upstream of the inlet of the device.

10. Composite thread obtained according to the process defined by Claim 1, characterised in that it is formed by a core comprising filaments of a material serving as a reinforcement, the core being coated with a layer of thermoplastic organic material and being at least partially impregnated by that material.

11. Composite thread according to Claim 10, characterised in that its core is formed by all of the filaments grouped in a single bundle, at least some of them remaining free to move with respect to one another.

12. Composite thread according to Claim 11, characterised in that its core is formed by a bundle of filaments comprising a twist.

13. Composite thread according to any one of Claims 10 to 12, characterised in that the core of the thread is formed by filaments of a material serving as a reinforcement and filaments of a thermoplastic organic material.

14. Composite thread according to Claim 13, characterised in that it is formed by continuous glass filaments associated with filaments formed from a material selected from the group of organic materials capable of being converted into continuous filaments, such as polypropylenes, polyamides, polyesters.

15. Composite part, characterised in that it is obtained by winding a thread as defined by any one of Claims 10 to 14 onto a support.

16. Fabric or warp-knit product, characterised in that its weft and/or its warp is/are formed by a thread as defined by any one of Claims 10 to 14.

17. Shaped composite obtained by pultrusion from a multiplicity of reinforcing threads, characterised in that at least some of the threads used are composite threads as defined by any one of Claims 10 to 14.

## Patentansprüche

1. Verfahren zur Herstellung eines Verbundfadens, der aus einer Vielzahl mit einem thermoplastischen organischen Material verbundener Filamente gebildet ist, gemäß welchem der Faden in der Achse des zentralen Kanals einer Einrichtung mechanisch gezogen wird, die in Form eines Winkelkopfs am Ende eines Extruders angebracht ist, wobei sich der Faden mit dem in diesem Kanal unter Druck im geschmolzenen Zustand vorhandenen organischen Material in Berührung befindet, **dadurch gekennzeichnet, daß** das organische Material in den Kanal in Richtung des Fadens und konzentrisch zu diesem eingespritzt und dieser Faden ab seinem Kontakt mit dem Material einem maximalen Radialdruck ausgesetzt wird, der unter 50 bar und über wenigstens einen Teil seines Weges im Kanal gleich bleibt.

2. Verfahren nach Anspruch 1, **dadurch gekennzeichnet, daß** das organische Material in den zentralen Kanal der Einrichtung derart eingespritzt wird, daß sich der Fluß des eingespritzten Materials zum Ausgang dieses Kanals richtet.

3. Verfahren nach Anspruch 1 oder 2, **dadurch gekennzeichnet, daß** das organische Material derart eingespritzt wird, daß sich der Materialfluß mit einer mittleren Geschwindigkeit fortbewegt, die wenigstens gleich der Hälfte der Fortbewegungsgeschwindigkeit des Fadens ist.

4. Verfahren nach einem der vorhergehenden Ansprüche, **dadurch gekennzeichnet, daß** der Faden mit einer Geschwindigkeit gezogen wird, die wenigstens 5 Meter pro Sekunde beträgt.

5. Verfahren nach einem der vorhergehenden Ansprüche, **dadurch gekennzeichnet, daß** bei einem gegebenen organischen Material dessen Eindringtiefe in den Faden eingestellt wird, indem man den Druck und/oder die Viskosität dieses Materials, das in den zentralen Kanal der Einrichtung kommt, und/oder die Durchlaufgeschwindigkeit des Fadens durch die Einrichtung regelt.

6. Verfahren nach einem der vorhergehenden Ansprüche, **dadurch gekennzeichnet, daß** der mit thermoplastischem organischem Material ummantelte Faden nach der Einrichtung abgekühlt wird, indem man ihn eine Zone durchlaufen läßt, in welcher er der Einwirkung eines gasförmigen oder flüssigen Fluids ausgesetzt ist.

7. Verfahren nach Anspruch 6, **dadurch gekennzeichnet, daß** man den Faden abkühlt, indem auf seinem Durchlauf Wassertröpfchen zerstäubt werden.

8. Verfahren nach einem der vorhergehenden Ansprüche, **dadurch gekennzeichnet, daß** dem Faden bei seiner Fortbewegung eine Verdrehung und eine ununterbrochene Drehbewegung verliehen wird.

9. Verfahren nach Anspruch 8, **dadurch gekennzeichnet, daß** dem Faden die Drehbewegung derart verliehen wird, daß seine Verdrehung vor dem Eingang der Einrichtung beginnt.

10. Verbundfaden, hergestellt gemäß dem Verfahren nach Anspruch 1, **dadurch gekennzeichnet, daß** er aus einer Filamente aus einem als Verstärkung dienenden Material enthaltenden Seele gebildet ist, die mit einer Schicht aus thermoplastischem organischem Material ummantelt und wenigstens teilweise mit diesem Material imprägniert ist.

11. Verbundfaden nach Anspruch 10, **dadurch gekennzeichnet, daß** seine Seele aus einer Einheit von Filamenten gebildet ist, die zu einem einzigen Bündel neu angeordnet sind, wobei wenigstens ein Teil von ihnen frei bleibt, sich in bezug aufeinander zu bewegen.

12. Verbundfaden nach Anspruch 11, **dadurch gekennzeichnet, daß** seine Seele aus einem Bündel von Filamenten gebildet ist, die eine Verdrehung enthalten.

13. Verbundfaden nach einem der Ansprüche 10 bis 12, **dadurch gekennzeichnet, daß** seine Seele aus Filamenten aus einem als Verstärkung dienenden Material und Filamenten aus einem thermoplastischen organischen Material besteht.

14. Verbundfaden nach Anspruch 13, **dadurch gekennzeichnet, daß** er aus endlosen Glasfilamenten hergestellt ist, die mit Filamenten verbunden sind, die aus einem Material gebildet sind, das aus der Gruppe in Endlosfilamente umwandelbarer organischer Materialien wie Polypropylene, Polyamide und Polyester ausgewählt ist.

15. Verbunderzeugnis, **dadurch gekennzeichnet, daß** es durch Aufwickeln eines wie in einem der Ansprüche 10 bis 14 definierten Fadens auf einem Träger hergestellt ist.

16. Gewebe oder Kettengewirk, **dadurch gekennzeichnet, daß** sein Schuß und/oder seine Kette aus einem wie in einem der Ansprüche 10 bis 14 definierten Faden gebildet ist/sind.

17. Verbundprofil, hergestellt durch ein Pultrusionsverfahren aus einer Vielzahl von Verstärkungsfäden, **dadurch gekennzeichnet, daß** wenigstens ein Teil der verwendeten Fäden wie in einem der Ansprüche 10 bis 14 definierte Verbundfäden sind.
